# EUROPEAN PATENT APPLICATION

(11) **EP 2 223 893 A1**
(43) Date of publication of application: **01.09.2010**
(21) Application number: 08867607.7
(22) Date of filing: 26.12.2008
(51) Int. Cl.: C01B 33/02

(54) **SILICON MANUFACTURING APPARATUS**

(30) Priority: 28.12.2007 JP 2007339468
(71) Applicant: Tokuyama Corporation, Shunan-shi Yamaguchi 745-8648 (JP)
(72) Inventor: NOUMI, Hiroo, Shunan-shi Yamaguchi 745-8648 (JP); YOSHIMATSU, Nobuaki, Shunan-shi Yamaguchi 745-8648 (JP); SUGIMURA, Shigeki, Shunan-shi Yamaguchi 745-8648 (JP)
(74) Representative: Jackson, Martin Peter
(86) International application number: PCT/JP2008/073719
(87) International publication number: WO 2009/084627

(57) **Abstract**

[Abstract] To provide an apparatus for producing silicon capable of recovering silicon sufficiently in a recovery container even if the silicon deposited in a reaction container solidifies in the shape of an anthill.

[Means for Solution] The apparatus for producing silicon has means for moving a recovery container 14 in a reaction container body 2. The moving means includes a support shaft 18 for supporting a bottom wall 14b of the recovery container 14 and a drive unit 17 for rotating the support shaft 18, which are provided for the recovery container 14. The support shaft 18 is deviated from the position of the center portion of the opening 7a on the lower end side of the reaction tube 7 so that the support shaft 18 suitably rotates at the time when the silicon is recovered in the recovery container 14 thereby varying the position on where the anthill is formed.

## Description

### Technical Field:

This invention relates to a novel apparatus for producing silicon by causing silicon precipitated in a reaction tube to melt and fall, and recovering silicon in a recovery container, wherein use is made of a recovery container having a large volume to efficiently recover the silicon.

### Background Art:

Polycrystal silicon has been used as a starting material of semiconductors and solar generation cells that have now been extensively used in a variety of fields and that are expected to be further developed and demanded in the future. It has, therefore, been desired to efficiently produce polycrystal silicon in a highly pure form.
A conventional method of producing polycrystal silicon can be represented by, for example, the Siemens' method according to which the surface of a silicon rod disposed in a bell jar is heated, and is brought into contact with a starting gas for precipitating silicon containing chlorosilanes such as trichlorosilane (SiHCl₃) and monosilane (SiH₄) as well as a reducing gas such as hydrogen to thereby precipitate polycrstal silicon.

The above Siemens' method has a feature in that the silicon can be obtained in a highly pure form. Because of its batchwise precipitation, however, the Siemens' method is accompanied by such a problem as very cumbersome processes as installing a silicon rod which is a principal component, heating by feeding an electric current, precipitation, cooling, taking out, and washing the bell jar.
To solve the above problem, there have been proposed a method of efficiently producing silicon and an apparatus therefor, i.e., a method of producing polycrystal silicon by feeding a starting gas for precipitating silicon into a cylindrical reaction container heated at a temperature lower than the melting point of the silicon to precipitate the silicon, and heating the inner surface of the cylindrical reaction container at a temperature not lower than the melting point of the silicon so that the precipitated silicon is partly or wholly melted and that the precipitated silicon is caused to fall and is recovered, and an apparatus for producing silicon used for the above method (see patent document 1).

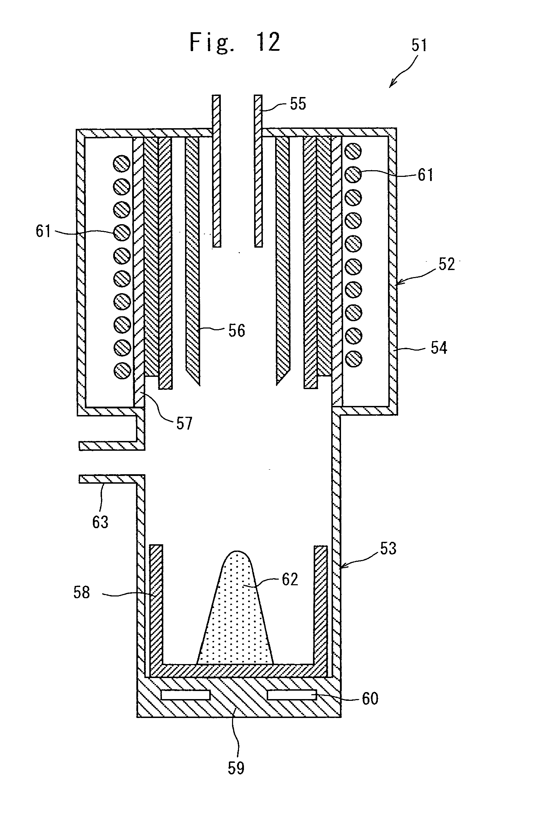

Fig. 12 illustrates a conventional apparatus for producing silicon.
The apparatus 51 for producing silicon includes a reaction unit 52 located at an upper position and a recovery unit 53 located at a lower position, and a gas-feed pipe 55 is provided at a central portion in a ceiling wall of a reaction container body 54 to feed chlorosilanes and hydrogen which are the starting materials of silicon. A reaction tube 56 is arranged surrounding the gas-feed pipe 55 and maintaining a gap. A high-frequency heating coil 61 is wound around a partitioning wall 57 that is positioned on the outer side of the reaction tube 56.
In the recovery unit 53 at the lower end of the reaction container body 54, a recovery container 58 is placed on a support floor wall of the recovery unit 53. A cooling jacket 60 is arranged in the support floor wall 59, and is connected to a feed port and to an exhaust port of cooling means that is not shown to circulate the cooling water. A gas exhaust pipe 63 is arranged between the reaction unit 52 and the recovery unit 53.

If a voltage is applied to the high-frequency heating coil 61 in the apparatus 51 for producing silicon of the above structure, the reaction tube 56 is heated by eddy currents produced by a high frequency of the high-frequency heating coil 61, and the inner surface of the reaction tube 56 is heated at a temperature in excess of the melting point of the silicon. The gas-feed pipe 55 feeds the chlorosilanes and hydrogen which come in contact with the inner surface of the reaction tube 56 causing silicon to be precipitated in a molten state. The silicon solution precipitated in the molten state falls creeping the lower end of the reaction tube 56, flows down incessantly from the opening at the lower end of the reaction tube 56, and is recovered in the recovery container 58 positioned just under thereof.
The silicon recovered in the recovery container 58 is cooled by the cooling water in the cooling jacket 60 before the recovery container 58 is taken out, and is taken in the cooled and solidified state out of the reaction container body 54 together with the recovery container 58.
Patent document 1: WO02/100777

### Disclosure of the Invention:

### Problems that the Invention is to Solve:

When the recovery container 58 is filled with the molten silicon that is falling in the reaction container body 54, the apparatus must be opened to take out the recovery container and to replace it with a new container. The period for exchange can be lengthened with an increase in the volume of the recovery container and, therefore, it is desired to increase the amount of recovery.
It is considered that the above requirement can be effectively met by increasing the area of the opening 14a of the recovery container (usually, having the same area as the bottom surface of the recovery container) relative to the projected area at the lower end of the reaction tube along which the molten silicon falls at the time of recovering silicon from the reaction tube. When recovered in the recovery container 58, however, the molten silicon does not easily spread flat. Namely, the molten silicon solidifies as represented by solidified silicon 62 shown in Fig. 12; i.e., it was confirmed that the solid matter gradually deposits on the bottom surface and, depending on the cases, a phenomenon takes place in that the solid silicon grows up like an anthill. Further, if the silicon is caused to fall down in an increased amount, the above phenomenon of anthill can be reduced to some extent. However the silicon does not spread flat but builds up like a mountain lowering the space utilization efficiency of the recovery container and making it difficult to sufficiently extend the period before replacing the container.
The above problem appears conspicuously when the opening area of the recovery container is increased in an attempt to increase the amount of recovery of silicon per a batch.
The present invention was accomplished in view of the above circumstances and has an object of providing an apparatus for producing silicon which is capable of recovering silicon in the recovery container to a sufficient degree despite the silicon precipitated in the reaction container builds up and solidifies in the form of an anthill or a mountain in the recovery container.

### Means for Solving the Problems:

It has not been fully known yet why the anthill forms but it is presumed that the silicon melted at about 1400°C is cooled through the ambient temperature (about 200°C in a portion of the recovery container) before it arrives at the recovery container and, besides, heat is robbed from the bottom surface of the recovery container on the support floor wall which supports the recovery container, whereby the amount of heat becomes less than the amount of heat necessary for the silicon to maintain the molten state, and the silicon flows difficultly and, eventually, solidifies.
It was, further, learned that the above problem occurs when the distance is great from the precipitation/reaction portion of the reaction container body to the recovery container. By taking into consideration the installation of the gas exhaust pipe and the ambient temperature at the time of taking out the recovery container, however, there is a limitation on shortening the distance. Therefore, the present invention employs means for solution that has no relation to the height or shape of the reaction container body.

In order to solve the above problems, the present invention provides an apparatus for producing silicon, comprising a gas-feed pipe for feeding chlorosilanes and hydrogen into a reaction container, a reaction tube for precipitating silicon from the chlorosilanes and hydrogen, heating means for melting the precipitated silicon, a recovery container disposed just under the opening on the lower end side of the reaction tube and for recovering the molten silicon flowing down from the reaction tube, and a support floor wall on which the bottom portion of the recovery container is placed, wherein the reaction container is provided with moving means for moving the recovery container, and the recovery container is suitably moved by the moving means at the time when the silicon is precipitated so as to vary the position on where the silicon flows down relative to the recovery container.
In the apparatus for producing silicon, the moving means includes a support shaft for supporting the bottom portion of the recovery container and a drive unit for rotating the support shaft, which are provided for the recovery container, the support shaft being deviated from the position of the center portion of the opening on the lower end side of the reaction tube so that the support shaft suitably rotates at the time when the silicon is recovered in the recovery container.
In the apparatus for producing silicon, the recovery container is constituted by split pieces that are split into blocks, each split piece being provided with engaging portions by which it can be combined with other split pieces or removed from other pieces, enabling the recovery container to be assembled or disassembled.
In the apparatus for producing silicon, a support plate is fixed to the support shaft to support the bottom portion of the recovery container, and a heat-insulating member is arranged between the support plate and the bottom wall, the support plate and the heat-insulating member being detachable from the recovery container.
In the apparatus for producing silicon, the heating means effects the heating by a high-frequency heating coil wound around a partitioning wall on the outer side of the reaction tube in the radial direction thereof.
In the apparatus for producing silicon, the moving means is a slide means for sliding the recovery container in the transverse direction relative to the support floor wall.

### Effects of the Invention:

The apparatus for producing silicon of the present invention is provided with moving means for moving the recovery container relative to a position on the lower end side of the reaction tube. Therefore, even if the silicon grows like an anthill or a mountain, the position of formation can be shifted. Further, even the recovery container that happens to possess a large opening area can be effectively utilized to recover the silicon in large amounts.
In the apparatus for producing silicon, the moving means includes a support shaft for supporting the bottom portion of the recovery container and a drive unit for rotating the support shaft, which are provided for the recovery container, and the support shaft is deviated from the position of the center portion of the opening on the lower end side of the reaction tube. Therefore, the silicon can be recovered in the recovery container maintaining good efficiency (minimizing the gaps) even in case the silicon grows like an anthill.
In the apparatus for producing silicon, the support shaft is supported by a support block, a gas-seal portion is formed surrounding the support shaft to maintain sealing between the support shaft and the support block, and a pressure larger than a pressure in the reaction container is fed to the gas-seal portion. With the support shaft being allowed to rotate, it is probable that the gas may leak through the support shaft. However, the above sealing structure prevents the reaction gas in the reaction container from leaking to the exterior.
In the apparatus for producing silicon, a support plate is fixed to the support shaft to support the bottom portion of the recovery container, and a heat-insulating member is arranged between the support plate and the bottom wall, the support plate and the heat-insulating member being detachable from the recovery container. Therefore, the heat of the recovery container is not conducted to the drive unit via the support shaft, and the drive unit is protected from the heat.
In the apparatus for producing silicon, the heating means effects the heating by a high-frequency heating coil wound around a partitioning wall on the outer side of the reaction tube in the radial direction thereof. Therefore, the reaction can be smoothly conducted for forming silicon.

### Brief Description of the Drawings:

[Fig. 1] is a schematic sectional view of a recovery container arranged in a reaction container body in an apparatus for producing silicon according to a first embodiment of the present invention.
[Fig. 2] is a perspective view in a state where the support structure of the recovery container arranged in the recovery portion of the apparatus for producing silicon of Fig. 1 is viewed from the lower side.
[Fig. 3] is a schematic sectional view of the apparatus for producing silicon in a state where the recovery container is turned by 180 degrees in Fig. 1.
[Fig. 4]A is a plan view of the recovery container forming four anthills therein, and B is a plan view of the recovery container forming six anthills therein.
[Fig. 5] is a schematic sectional view of the recovery container arranged in the reaction container body in the apparatus for producing silicon according to a second embodiment of the present invention.
[Fig. 6] is a perspective view of the recovery container in the apparatus for producing silicon shown in Fig. 5.
[Fig. 7] is a perspective view illustrating how to assemble the recovery container in the apparatus for producing silicon shown in Fig. 5.
[Fig. 8] is a perspective view of the recovery container in the apparatus for producing silicon according to a third embodiment of the present invention.
[Fig. 9] is a disassembled perspective view of when the recovery container shown in Fig. 8 is split.
[Fig. 10] is a view illustrating how to assemble the split container shown in Fig. 8, wherein A is a disassembled perspective view of when the recovery container shown in Fig. 8 is split, B is a perspective view of when the carbon pieces of the split container are annularly assembled, and C is a perspective view of the split container in a state of being assembled.
[Fig. 11] is a perspective view showing a modified example of the split containers (fan shape) of the present invention.
[Fig. 12] is a schematic sectional view of a conventional apparatus for producing silicon.

### Description of Reference Numerals:

- 1: apparatus for producing silicon
- 2: reaction container body
- 3: reaction unit
- 4: recovery unit
- 6: gas-feed pipe
- 7: reaction tube
- 8: carbon tube
- 11: high-frequency heating coil
- 14: recovery container
- 14b: bottom wall
- 16: support floor wall
- 17: drive unit
- 18: support shaft
- 21: support block
- 24: sealing gas unit
- 25, 27: cooling jackets
- 37: anthill
- 50a, 55a: lower carbon pieces
- 50b: middle carbon pieces
- 50c, 55b: upper carbon pieces
- 51a, 56a, 56c: pins
- 51b, 56b, 56d: pin holes

### Best Mode for Carrying Out the Invention:

The apparatus for producing silicon according to a first embodiment of the invention will now be described with reference to the drawings.

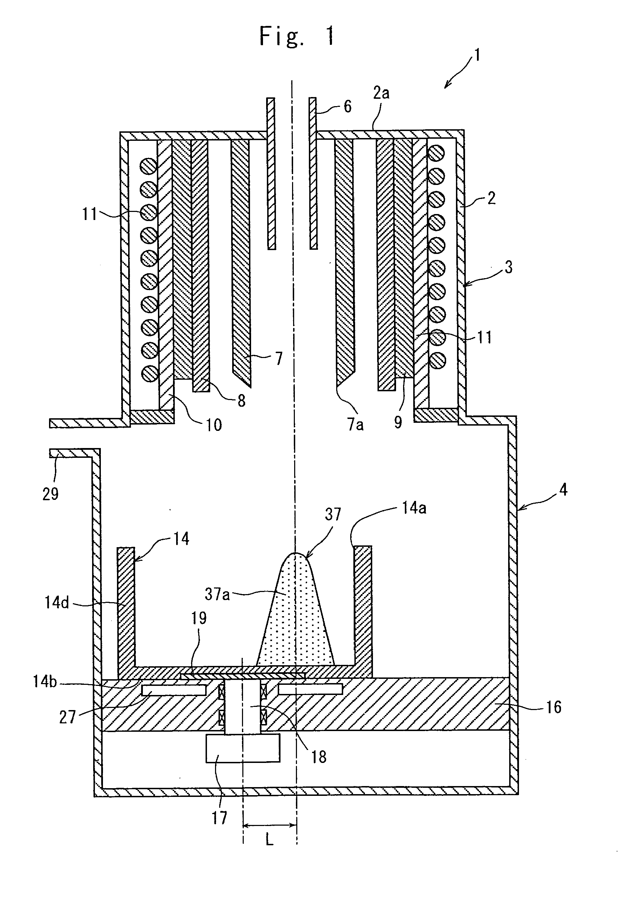

Fig. 1 shows an apparatus 1 for producing silicon according to the present invention. The apparatus 1 for producing silicon includes a reaction unit 3 occupying an upper portion of a reaction container body 2 that has a cylindrical outer wall, and a recovery unit 4 occupying a lower portion thereof. At the central portion of a top panel wall 2a of the reaction container body 2, there is provided a gas-feed pipe 6 of a cylindrical shape for feeding chlorosilanes and hydrogen that are the starting materials of silicon. The gas-feed pipe 6 is so attached that the axis thereof is directed in the up-and-down direction penetrating through the top panel wall 2a. The gas-feed pipe 6 is connected at its upper end side to a gas-feed means capable of feeding the chlorosilanes and hydrogen, that is not shown.
A cylindrical reaction tube 7 is arranged surrounding the gas-feed pipe 6, forming an annular gap relative to the gas-feed pipe 6 and in concentric with the gas-feed pipe 6. The lower end of the reaction tube 7 is opened at a position lower than the lower end portion of the gas-feed pipe 6. It is desired that the reaction tube 7 is formed by using a carbon material such as graphite that withstands at the melting point of silicon. Upon being coated with silicon nitride or silicon carbide, the inner surface of the reaction tube 7 that comes in contact with silicon features improved durability.

The reaction container body 2 is provided with heating means which in this embodiment comprises a high-frequency heating coil 11 wound around the outer circumference of a partitioning wall 10. The high-frequency heating coil 11 is connected to a high-frequency power source that is not shown.
A heat-insulating member 9 is provided on the inner circumferential surface of the partitioning wall 10, and a carbon tube 8 is arranged maintaining an annular gap relative to the inner circumferential surface of the heat-insulating member 9, i.e., relative to the outer circumferential portion of the reaction tube 7. The carbon tube 8 is made of a carbon material as a base material that can be heated by a high frequency of the high-frequency heating coil 11. When the high-frequency heating coil 11 is in operation, the heat-insulating member 9 insulates the heat generated by the carbon tube 8, and is made, for example, of a felt-like carbon fiber, ceramic sintered material or the like material.

The recovery unit 4 positioned under the reaction container body 2 is provided with a recovery container 14 of a cylindrical shape having bottom. The recovery container 14 is positioned just under the reaction tube 7. The area of an opening 14a of the recovery container may be larger than an area calculated from the outer diameter of an opening at the lower end of the reaction tube (hereinafter also referred to as projected area of the opening). Here, however, the apparatus of the invention becomes effective particularly when the area of the opening of the recovery container 14 is sufficiently larger than the projected area of the opening of the reaction tube 7. Concretely, the effect is obtained when the recovery container 14 has the opening 14a of an area which is sufficiently larger, say, larger by 20 to 2500 times and, particularly, 20 to 500 times, than the projected area of the opening of the reaction tube 7.
In the invention, though there is no particular limitation, the amount of the molten silicon falling from the reaction tube 7 is, usually, 0.01 to 1 kg/min · cm² in terms of an average value of values obtained by dividing the falling amounts per a time by the projected area of the opening.
In precipitating the silicon on the wall surface of the reaction tube 7, an average value of the falling amounts is used when the temperature of the wall surface of the reaction tube 7 is maintained to be not lower than the melting point of the silicon at all times to incessantly fall the molten silicon. Or, an average value of the falling amounts of from the start of fall to the end of fall is used when the temperature of the wall surface of the reaction tube 7 is maintained to be not lower than the precipitation temperature of the silicon but lower than the melting point of the silicon and, thereafter, the temperature of the wall surface is elevated to be not lower than the melting point of the silicon to fall the molten silicon.
The recovery container 14 is placed on a support floor wall 16 that is arranged in a horizontal direction on the lower side of the reaction container body 2.
The recovery container 14 is made of carbon which is a material having a large strength to heat and, concretely, has a bottom wall 14b of an inner diameter of 1700 mm and has a height of 1000 mm. The bottom wall 14b is formed by assembling four fan-shaped carbon pieces that are split into four in the circumferential direction at an interval of 90 degrees, and the side wall 14d is formed by laminating band-like arcuate carbon pieces of a height of 100 mm split into eight on the outer circumferential portion of the bottom wall 14b (how to assemble the recovery container 14 will be described later in the second embodiment).

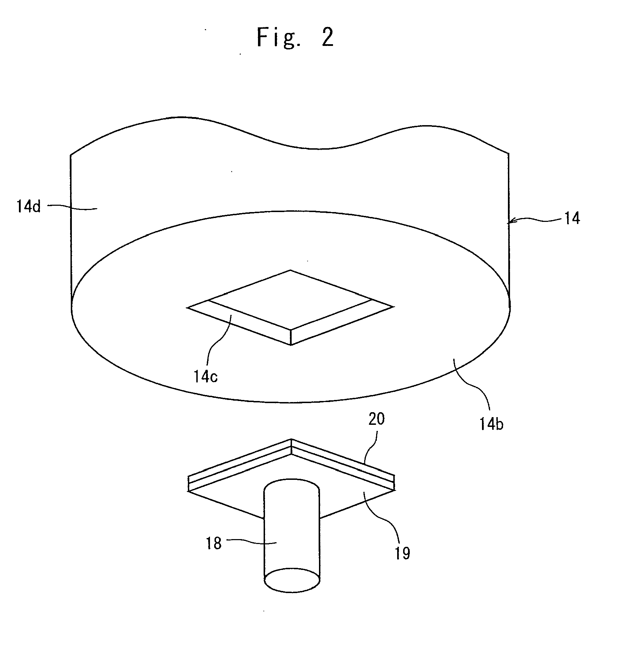

Referring to Fig. 2, a support plate 19 of a square shape is horizontally attached to an upper end of a support shaft 18, and the upper surface of the support plate 19 is covered with a heat-insulating member 20 of the same shape as that of the support plate 19. In the lower surface of the recovery container 14, there is formed a recessed portion 14c of the same shape as that of the support plate 19 and the heat-insulating member 20 being corresponded thereto so that the support plate 19 and the heat-insulating member 20 are fitted into the recessed portion 14c. The support plate 19 in this embodiment is formed by using a stainless steel and the heat-insulating member 20 is formed by using felt-like carbon. The support plate 19 and the heat-insulating member 20 are not fixed to the recessed portion 14c, and the recovery container 14 is detachably coupled to the support plate 19 and the heat-insulating member 20.
Referring to Fig. 1, the support shaft 18 for supporting the recovery container 14 is deviated by a length L from the center axis of the reaction tube 7. Here, however, when the recovery container 14 is rotated, the bottom surface thereof must be positioned just under the opening 7a on the lower side of the reaction tube 7 irrespective of the rotational angle of the recovery container 14. A drive unit 17 is provided at the lower portion of the support shaft 18 to rotate the support shaft 18.
A gas exhaust port 29 is formed between the reaction unit 3 and the recovery unit 4 of the reaction container body 2 to exhaust the gas fed into the reaction container.

Next, described below is the operation of the apparatus for producing silicon according to the first embodiment.
If a voltage is applied to the high-frequency heating coil 11 of the apparatus 1 for producing silicon in a state where the recovery container 14 is empty, the carbon tube 8 is heated by eddy currents produced by a high frequency of the high-frequency heating coil 11, and the inner surface of the reaction tube 7 is heated at a temperature for precipitating silicon. Thereafter, the chlorosilanes and hydrogen are fed from the gas-feed pipe 6. As the chlorosilanes used for the reaction, there can be exemplified triclorosilane (SiHCl₃), silicon tetrachloride (SiCl₄)), dichlorosilane (SiH₂Cl₂), monochlorosilane (SiH₃Cl), chlorodisilanes such as hexachlorodisilane (Si₂Cl₆) and chlorotrisilanes such as octachlorotrisilane (Si₃Cl₈).
These gases are brought into contact with the inner surface of the reaction tube 7 to precipitate the silicon in a molten state. At this moment, the gap between the gas-feed pipe 6 and the reaction tube 7 becomes a low-temperature region. Therefore, a sealing gas such as hydrogen gas or argon gas is fed into this portion from feed means that is not shown so that a mixed gas of the chlorosilane gas and hydrogen gas will not enter into the gap.
The gas formed by the reaction of the chlorosilane gas and hydrogen gas in the reaction container body 2 as well as the sealing gas, are exhausted through the gas exhaust port 29. Further, in order that the gas in the container will not leak to the exterior, a pair of O-rings that is not shown is arranged surrounding the support shaft 18 preventing the gas in the container body 2 from flowing to the exterior.

The silicon precipitated on the reaction tube 7 is heated at a temperature higher than the temperature (1400 degrees) at which the silicon melts. The silicon solution in the molten state flows along the inner surface of the reaction tube 7 down to the lower end portion thereof, drips incessantly from the opening at the lower end of the reaction tube 7 and is recovered in the recovery container 14 positioned just under thereof. The interior of the recovery unit 4 is heated at about 200°C, and the recovery container 14 is in contact with the support floor wall 16. Therefore, the recovery container 14 is cooled, the molten silicon is solidified as shown in Fig. 1; i.e., the silicon falls on the silicon that has dripped and grows like an anthill (hereinafter referred to as anthill). Since the support shaft 18 which is a rotary shaft of the recovery container 14 is deviated relative to the reaction tube 7, the anthill 37a is not formed on the center axis of the recovery container 14.

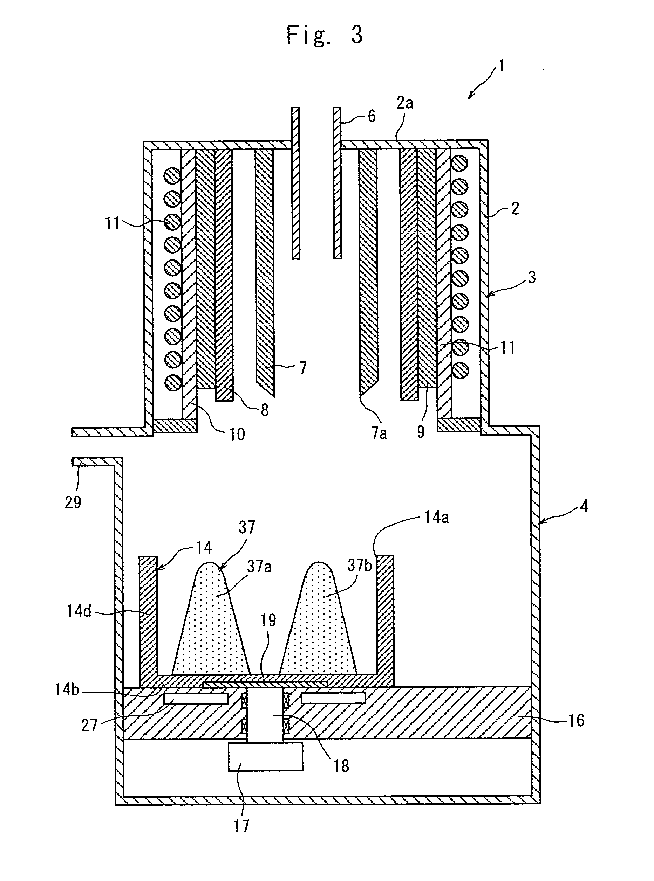

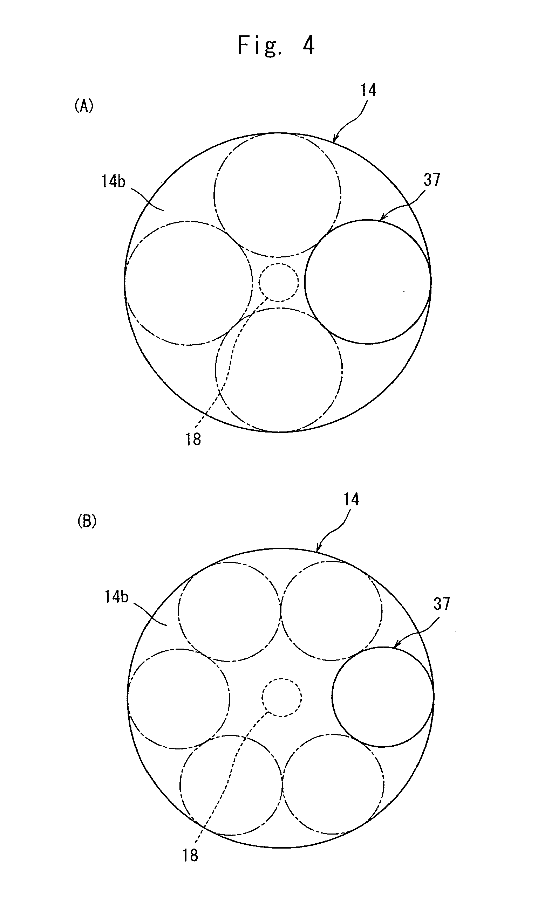

After the anthill 37a has grown to a suitable size, the operator turns a handle of the drive unit 17 to rotate the gears in the drive unit 17 so that the bottom wall 14b of the recovery container 14 in which no anthill 37a has been formed is brought to just under the opening 7a of the reaction tube 7. As shown in Fig. 3, therefore, another anthill 37b is formed on the bottom wall 14b of the recovery container 14. If the anthills 37 are formed on four places as shown in Fig. 4A, then the silicon can be recovered in an amount four times as great as that of the recovery container that does not rotate. If the anthills 37 are formed on six places as shown in Fig. 4B, then the silicon can be recovered in an amount six times as great. The number of the anthills 37 can be arbitrarily set in a range in which the anthills 37 do not overlap on each other.
Therefore, the diameter of the anthill 37 to be formed is estimated, and the radius of the recovery container 14 is determined from the diameter of the anthill 37. Thus, even if the silicon in the molten state is solidified in the recovery container 14 forming an anthill, it is made possible to efficiently recover the silicon in large amounts.

In a state where the temperature of the recovery container 14 is elevated upon receiving the heat of the silicon recovered in the recovery container 14, it is probable that the heat is conducted to the drive unit 17 and the like through the support shaft 18. With the heat-insulating member 20 being arranged on the support plate 19 at the upper part of the support shaft 18 shown in Fig. 2, however, heat is little conducted to the support shaft 18. Besides, a support block 21 for supporting the support shaft 18 is provided with a cooling jacket 25 to cool the support shaft 18. Therefore, the drive unit 17 and the like are prevented from being heated by the conduction of heat.

After the silicon is recovered in a predetermined amount in the recovery container 14, the cooling water is fed into the cooling jacket 27 by feed means that is not shown to cool the support floor wall 16. Upon cooling the support floor wall 16, the recovery container 14 in contact with the support floor wall 16 is cooled and, therefore, the silicon is cooled, too. The cooling jacket 27 is arranged to cool the silicon. As required, however, the cooling jacket 27 may be operated while the silicon is being precipitated.
After the silicon is solidified and cooled, the recovery container 14 is taken out from the reaction container body 2. At the time of taking out the recovery container 14, the reaction unit 3 is sealed by a sealing shutter that is not shown, and the recovery container is taken out while substituting the gas in the recovery unit 4. Thereafter, the recovery unit 4 is disassembled to take the recovery container 14 out. The recovery container 14 has not been fixed to the support plate 19 or the heat-insulating member 20 that are fixed to the upper end portion of the support shaft 18. Therefore, the recovery container 14 can be easily detached from these members.

According to the present invention as described above, the recovery container 14 is so arranged as to move relative to the opening 7a on the lower side of the reaction tube 7. Therefore, the anthills 37 can be formed in an increased number in the recovery container 14; i.e., silicon can be recovered in increased amounts in the recovery container 14. Therefore, the apparatus 1 for producing silicon features an improved operation efficiency.
Further, in order that the drive unit 17 will not be affected by the heat of the recovery container 14, provision is made of the heat-insulating member 20 and the cooling jacket 25 so that heat will not be conducted to the lower end side of the support shaft 18. Moreover, ascend/descend means of the support shaft 18 necessary for ascending and descending the recovery container 14 is so designed as will not develop leakage, and the sealing gas is fed to the sealing portion to more reliably prevent the leakage of gas.

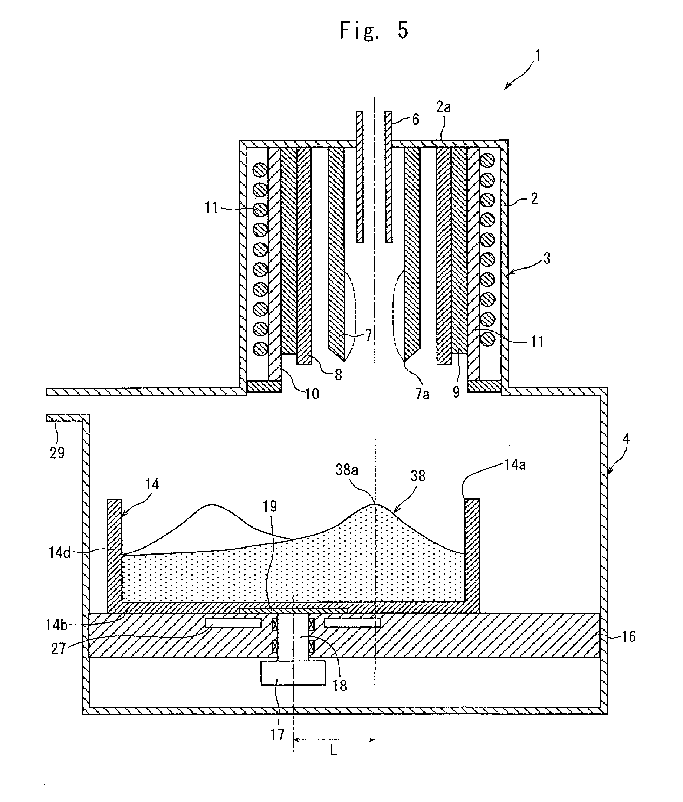

Next, a second embodiment of the invention will be described.
The apparatus for producing silicon according to this embodiment is capable of producing silicon in amounts larger than, and having a purity higher than, those of the apparatus for producing silicon according to the above first embodiment. Further, the apparatus for producing silicon of this embodiment uses the recovery unit 4 of a size larger than that of the apparatus for producing silicon of the above first embodiment. Here, however, the constituent parts having the same names as those of the above embodiment are denoted by the same reference numerals, and different portions will be described below in detail.
Referring to Fig. 5, the recovery unit 4 positioned at the lower portion of the reaction container body 2 of the apparatus 1 for producing silicon, is equipped with the recovery container 14 of a cylindrical shape having bottom. The recovery container 14 is positioned just under the reaction tube 7, and has an opening 14a formed at an upper part thereof in a size sufficiently larger than the diameter of the reaction tube 7.
The recovery container 14 is placed on the support floor wall 16 that is horizontally arranged on the lower side of the reaction container body 2.

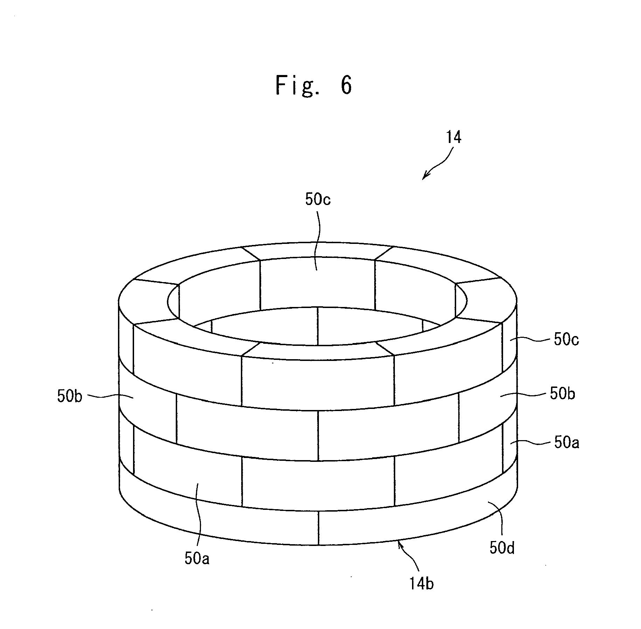

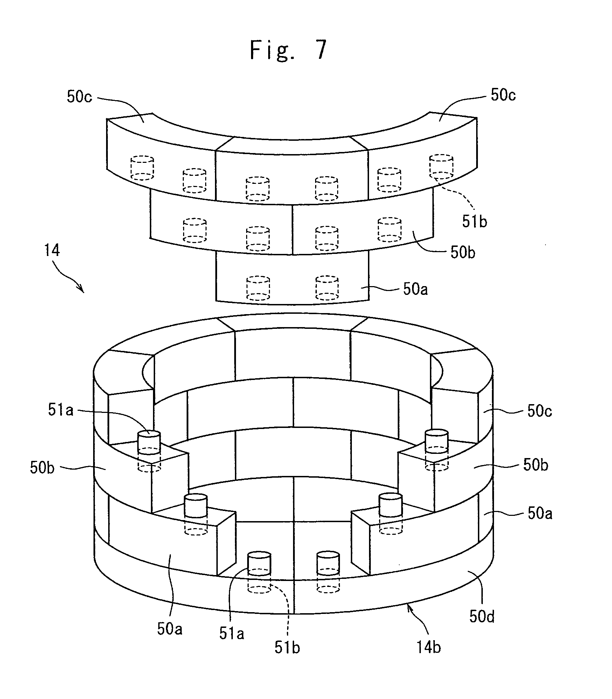

Referring to Fig. 6, the recovery container 14 is made of carbon which is a material having a large strength to heat and, concretely, has the bottom wall 14b that is formed by assembling four fan-shaped carbon pieces 50d that are split into four in the circumferential direction at an interval of 90 degrees, and the side wall 14d that is formed by laminating band-like arcuate carbon pieces 50a to 50c split into eight in the circumferential direction on the outer circumferential end portion of the bottom wall 14b .
If described in detail with reference to Fig. 7, pins 51a of a circular shape in transverse cross section are stud on the bottom wall 14b (block piece 50d) so as to protrude upward from the bottom wall 14b. In the lower surfaces of the carbon piece 50a and the middle carbon piece 50b, there are formed pin holes 51b that fit to the pins 51a, and pins 51a are stud on their upper surfaces. Further, pin holes 51b are formed in the lower portion only of the upper carbon piece 51c to fit to the pins 51a of the middle carbon piece 50b. To assemble the recovery container, the lower carbon pieces 50a and the middle carbon pieces 50b are laminated by being alternately deviated in the circumferential direction and, similarly, the middle carbon pieces 50b and the upper carbon pieces 50c are laminated by being alternately deviated in the circumferential direction.
The bottom wall 14b and the carbon pieces 50a to 50c are detachably fixed together relying only upon the pins 51a and the pin holes 51b, and can be detached by releasing the pin-hole engagement. Though the carbon pieces were described above in three layers for easy explanation, the recovery container, in practice, is formed having layers larger than three layers. The total number may be determined by taking the efficiency of disassembling operation into consideration, and the number of the layers may not be larger than three layers.

The recovery container according to this embodiment, like that of Fig. 2, has the support plate 19 of a square shape horizontally attached to the upper end of the support shaft 18, the upper surface of the support plate 19 being covered with the heat-insulating member 20 of the same shape as that of the support plate 19. In the lower surface of the recovery container 14, there is formed the recessed portion 14c of the same shape as that of the support plate 19 and the heat-insulating member 20 being corresponded thereto so that the support plate 19 and the heat-insulating member 20 are fitted into the recessed portion 14c. The support plate 19 in this embodiment is formed by using the stainless steel and the heat-insulating member 20 is formed by using felt-like carbon. The support plate 19 and the heat-insulating member 20 are not fixed to the recessed portion 14c, and the recovery container 14 is detachably coupled to the support plate 19 and the heat-insulating member 20.
Referring to Fig. 1, the support shaft 18 for supporting the recovery container 14 is deviated by the length L from the center axis of the reaction tube 7. Here, however, when the recovery container 14 is rotated, the bottom surface on the inner side thereof must be positioned just under the whole area of the opening 7a on the lower side of the reaction tube 7 irrespective of the rotational angle of the recovery container 14.

Next, described below is the operation of the apparatus for producing silicon according to the second embodiment.
In a state where the recovery container 14 is empty, if a voltage is applied to the high-frequency heating coil 11 of the apparatus for producing silicon, the carbon tube 8 is heated by eddy currents due to a high frequency of the high-frequency heating coil 11, and the inner surface of the reaction tube 7 is heated at a temperature at which silicon can be precipitated.
Described below is how the silicon precipitated on the reaction tube 7 melts and falls down. If the reaction tube 7 is heated at a temperature higher than the melting temperature (1400 degrees) of the silicon, then the silicon precipitated on the reaction tube incessantly falls on the recovery container. If the temperature is lower than the melting temperature, however, the silicon precipitates and deposits on the reaction tube. Here, if the temperature of the reaction tube is elevated to be slightly higher than the melting temperature, the precipitated silicon melts at a small rate and an extended period of time is required for the silicon to fall on the reaction container. If the temperature is further elevated, then the precipitated silicon falls in a short period of time. Here, the precipitated silicon is recovered in the recovery container 14 describing the shape of a mountain which is a more gently sloped anthill when it is caused to fall in a short period of time than that of when it is caused to fall in a long period of time.
By varying the rate of recovering the silicon as described above, it is allowed to vary the apparent density of silicon, to vary the compression strength and to vary properties thereof. Like the silicon recovered in the shape of an anthill, however, the silicon recovered in the shape of a mountain is still accompanied by the problem of a decreased recovery volume relative to the volume of the recovery container 15.

In this embodiment, unlike the above first embodiment, the silicon precipitated on the reaction tube 7 is caused to fall in a short period of time. That is, while feeding chlorosilanes and hydrogen from the gas-feed pipe 6, the temperature of the reaction tube 7 remains higher than the precipitation temperature of silicon but lower than the melting temperature thereof. Therefore, the precipitated silicon does not drip on the recovery container 14 but deposits on the inner wall of the reaction tube 7. Thus, the precipitated silicon deposits on the inner wall of the reaction tube 7 gradually increasing its thickness. The silicon that continues to precipitate deposits on the surfaces of the silicon that has been precipitated already except those portions of the silicon that has first precipitated and contacted to the inner wall of the reaction tube 7. Therefore, the subsequently precipitated silicon does not come in contact with the inner wall of the reaction tube 7 and, therefore, the silicon of a higher purity can be produced than when the silicon is incessantly recovered.
When the silicon has deposited in a predetermined amount on the reaction tube 7, the temperature of the reaction tube 7 is elevated to melt the precipitated silicon; i.e., the precipitated silicon that has deposited is caused to fall in a short period of time.

The silicon that has precipitated in a molten state is recovered on a portion of the recovery container 14 positioned just under thereof. The silicon that has precipitated falls in a short period of time and, therefore, spreads in the shape of a mountain 38 which is flatter than the anthill. Therefore, even if the recovery container 14 has an increased area, the precipitated silicon spreads on the floor over a wide area. Here, the interior of the recovery unit 4 is heated at about 200°C, and the recovery container 14 is in contact with the support floor wall 16. Therefore, the recovery container 14 is cooled, and the molten silicon solidifies in the shape of a mountain 38 as shown in Fig. 5.
Next, the support shaft 18 which is a rotary shaft of the recovery container 14 is turned (by, for example, 60 degrees, 90 degrees or 180 degrees) to bring a portion on where no top 38a of the mountain 38 has been formed to just under the reaction tube 7. Thereafter, the operation the same as the above operation for precipitating silicon is repeated.

After the silicon is recovered in a predetermined amount in the recovery container 14, the cooling water is fed into the cooling jacket 27 from feed means that is not shown to cool the support floor wall 16. Upon cooling the support floor wall 16, the recovery container 14 in contact with the support floor wall 16 is cooled and, therefore, the silicon is cooled.
After the silicon is solidified and cooled, the recovery container 14 is taken out from the reaction container body 2. To take out the silicon, the carbon pieces 50a to 50c of the recovery container 14 are removed starting with the upper carbon piece 50c; i.e. , all of the carbon pieces 50a to 50c of the side wall inclusive of middle carbon pieces 50b and lower carbon pieces 50a are removed to recover the silicon. After the silicon is recovered, the carbon pieces 50a to 50c are assembled on the bottom wall 14b again to reuse the recovery container 14.
In the step of precipitating the silicon, those portions that were described in the above first embodiment but were not described in this embodiment, were the same as those of the above first embodiment, and were not described again.

In this embodiment as described above, the precipitated silicon is caused to fall at one time from the reaction tube 7 to deposit the silicon in the shape of a gently sloping mountain 38. Besides, since the recovery container 14 is allowed to move relative to the opening 7a on the lower side of the reaction tube 7, the silicon is deposited in the recovery container 14 in the shape of a mountain 38 spreading up to the foot of the mountain enabling more silicon to be recovered in the recovery container 14. Therefore, the apparatus 1 for producing silicon features improved operation efficiency.

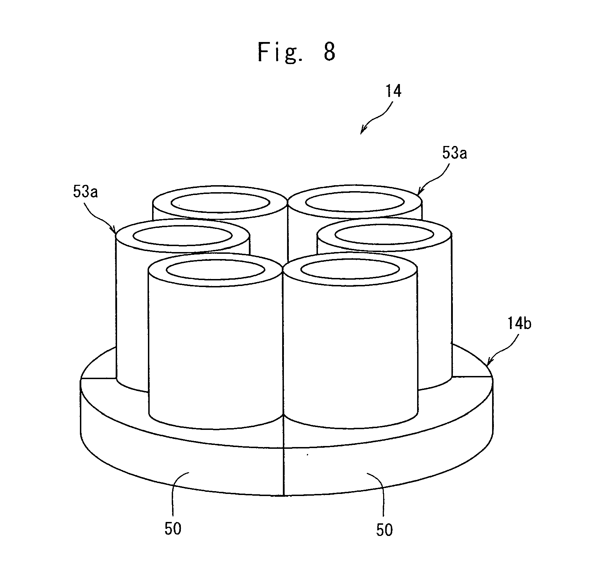

Next, a third embodiment of the invention will be described below.
This embodiment uses the apparatus for producing silicon which is the same as the apparatus for producing silicon of the above second embodiment except the shape of the recovery container 14. Therefore, the recovery container only will be described below.
Referring to Fig. 8, the recovery container 14 of the apparatus for producing silicon is provided in the recovery unit that is located at a lower portion of the reaction container body. The recovery container 14 is provided with a bottom wall 14b that can rotate and with split containers 53. A rotary shaft of the bottom wall 14b is disposed being deviated from the center axis of the reaction tube 7.
The split containers 53a of the same shape are provided on the upper part of the bottom wall 14b. In this embodiment, six split containers 53a are arranged on the bottom wall 14b at an interval of 60 degrees in the circumferential direction thereof. As the bottom wall 14b is rotated every 60 degrees, any split container 53a is positioned just under the reaction tube.

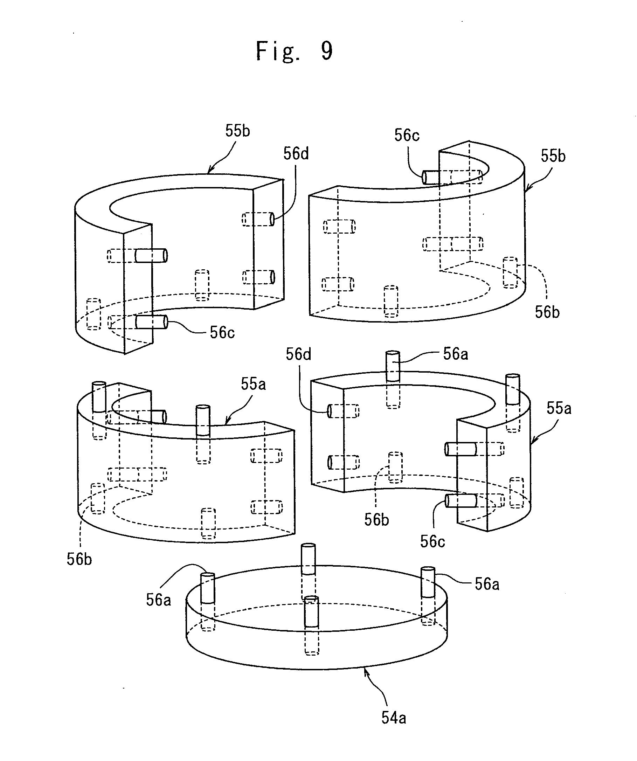

The recovery container 14 is made of a carbon material which is strong against the heat, and the bottom wall 14b thereof is fabricated by assembling four fan-shaped carbon pieces 50d at an interval of 90 degrees in the circumferential direction thereof.
Referring to Fig. 9, the split container 53a comprises a floor plate 54a and carbon pieces 55a, 55b. Pins 56a of a circular shape in transverse cross section are stud on the floor plate 54a of the shape of a disk so as to protrude upward from the floor plate 54a. A lower carbon piece 55a of a semicircular shape is provided on the floor plate 54a. A pair of lower carbon pieces 55a is combined together in an annular shape. A pair of pin holes 56b is formed in the bottom surface of each lower carbon piece 55a to fit to the pins 56a, and a pair of pins 56a is stud on the upper surface thereof.
The upper carbon piece 55b, too, is of a semicircular shape. A pair of upper carbon pieces 55b is combined together in an annular shape. A pair of pin holes 56b is formed in the bottom surface of each upper carbon piece 55b to fit to the pins 56a. A pair of pins 56c is stud up and down in one side surface of each of the lower and upper carbon pieces 55a, 55b, and a pair of pin holes 56d is formed in the other side surface of each of them.

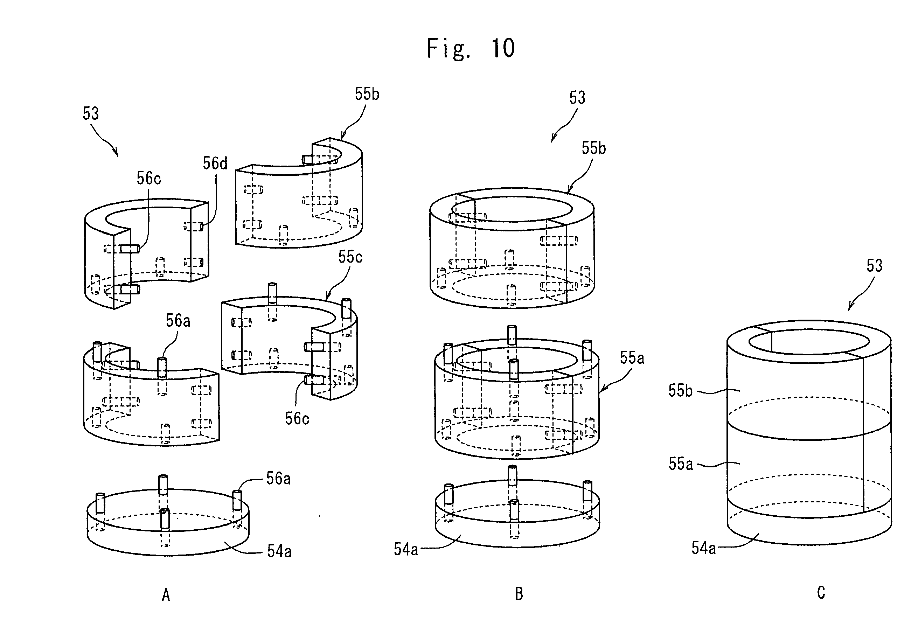

Upon fitting these pins 56c into the pin holes 56d, pairs of lower and upper carbon pieces 55a, 55b are assembled together.
To assemble the recovery container 14, the lower carbon pieces 55a are, first, assembled in an annular shape as shown in Fig. 10B and are placed on the floor plate 54a. Next, the upper carbon pieces 55b assembled in an annular shape are placed on the lower carbon pieces 55a. In assembling the upper carbon pieces 55b on the lower carbon pieces 55a, the upper carbon pieces 55b are placed on the lower carbon pieces 55a so as to be alternately deviated by 90 degrees in the circumferential direction. The floor plate 54a and the carbon pieces 55a, 55b are detachable, are fixed together relying only upon the pins 56a, 56c and the pin holes 56b, 56d, and can be split off upon releasing the engagement thereof. Though the carbon pieces were described above in two layers for easy explanation, they, in practice, may be used in one layer or in not less than two layers.

Like the one shown in Fig. 2, the bottom wall 14b of the recovery container 14 according to this embodiment is supported via the support shaft 18. The support plate 19 of a square shape is horizontally attached to an upper end of the support shaft 18, and the upper surface of the support plate 19 is covered with the heat-insulating member 20 of the same shape as that of the support plate 19. In the lower surface of the bottom wall 14b, there is formed a recessed portion 14c of the same shape as that of the support plate 19 and the heat-insulating member 20 being corresponded thereto so that the support plate 19 and the heat-insulating member 20 are fitted into the recessed portion 14c. The support plate 19 in this embodiment is formed by using a stainless steel and the heat-insulating member 20 is formed by using felt-like carbon. The support plate 19 and the heat-insulating member 20 are not fixed to the recessed portion 14c, and the recovery container 14 is detachably coupled to the support plate 19 and the heat-insulating member 20.

Next, described below is the operation of the apparatus for producing silicon according to the third embodiment.
In this embodiment like the above second embodiment, the silicon precipitated on the reaction tube is caused to fall in a short period of time. That is, the silicon is precipitated on the inner wall of the reaction tube; i.e., the precipitated silicon deposits on the inner wall of the reaction tube gradually increasing its thickness. The silicon that continues to precipitate deposits on the surfaces of silicon that has been precipitated already except those portions of the silicon that has first precipitated and contacted to the inner wall of the reaction tube. Therefore, the subsequently precipitated silicon does not come in contact with the inner wall of the reaction tube and, therefore, the silicon of a higher purity containing little impurities can be produced.
When the silicon has deposited in a predetermined amount on the reaction tube 7, the temperature of the reaction tube is elevated to melt the precipitated silicon; i.e., the precipitated silicon that has deposited is caused to fall in a short period of time.

The silicon that has precipitated in a molten state is recovered in any one of the split containers 53a of the recovery container 14 positioned just under thereof. The silicon that has precipitated is in a molten state and falls in a short period of time and, therefore, spreads in the shape of a mountain which is flatter than the anthill. The molten silicon is recovered in the split container 53a having a small diameter and, therefore, the center of the recovery container 14 swells up like a mountain. However, the foot of the mountain is gently sloped and, hence, the precipitated silicon can be recovered over nearly the whole of the recovery container 14. The interior of the recovery unit 4 is heated at about 200°C, and the recovery container 14 is in contact with the support floor wall (see support floor wall 16 of Fig. 5). Therefore, the recovery container 14 is cooled, and the molten silicon solidifies in the shape of a mountain.
Next, the recovery container 14 is turned to bring the split container 53a that is not still recovering silicon to just under the reaction tube. Thereafter, the operation the same as the above operation for precipitating silicon is repeated.

After the silicon is recovered in a predetermined amount in the split containers 53a, the cooling water is fed into the cooling jacket 27 from feed means that is not shown to cool the support floor wall. Upon cooling the support floor wall, the recovery container in contact with the support floor wall is cooled and, therefore, the silicon is cooled.
After the silicon is solidified and cooled, the recovery container 14 is taken out from the reaction container body. To take out the silicon, the upper carbon pieces 55b of the recovery container 14 are removed and, thereafter, the lower carbon pieces 50a are removed in this order. The silicon is recovered by thus removing all carbon pieces 55a, 55b. After the silicon is recovered, the carbon pieces 50a, 50b are assembled on the bottom wall 14b again to reuse the recovery container 14.
In the operation of precipitating the silicon, those portions that were described in the above first embodiment but were not described in this embodiment, were the same as those of the above first embodiment, and were not described again.

In this embodiment as described above, the precipitated silicon is caused to fall at one time from the reaction tube to deposit the silicon in the shape of a mountain having a gently sloped top. Besides, since the recovery container 14 is allowed to move relative to the opening on the lower side of the reaction tube, the silicon is deposited in the recovery container 14 in the shape of a gently sloped mountain spreading up to the foot of the mountain enabling more silicon to be recovered in the recovery container 14. Therefore, the apparatus for producing silicon features improved operation efficiency and, besides, the silicon is more efficiently recovered in the reaction container 14.

Though the invention was described above by way of embodiments, it should be noted that the invention can be varied or modified in a variety of other ways without departing from the technical spirit of the invention, as a matter of course.
In the above embodiments, the moving means was so constituted that the rotary shaft of the recovery container 14 was deviated from the center of the opening on the lower side of the reaction tube 7. However, the moving means may be so constituted that a plurality of cylinders are attached to the inner wall of the recovery unit 4 of the reaction container body 2, the cylinders being fixed at their end portions to the side wall 14d of the recovery container 14, and the cylinders are extended and contracted to move the recovery container 14 relative to the support floor wall 16. In this case, the center position of the shaft of the recovery container 14 can be moved linearly or in a curved manner.

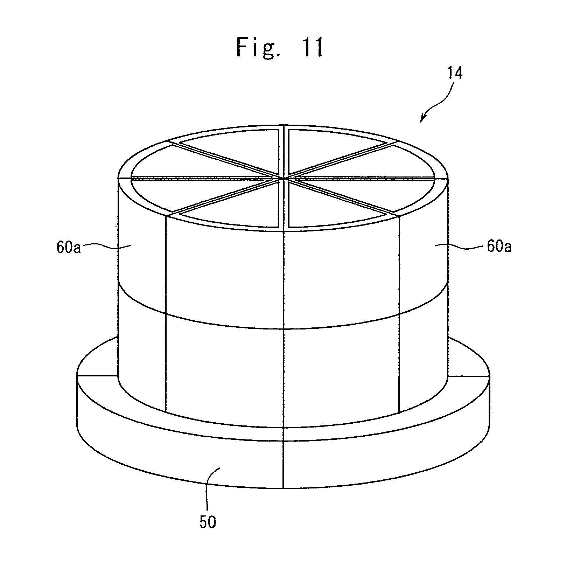

Further, the support shaft 18 which is the rotary shaft of the recovery container 14 may be made to move up and down and, at the time of recovering the molten silicon, the recovery container 14 may be rotated being lifted up above the support floor wall 16. In this case, the recovery container 14 does not come in contact with the support floor wall 16 and, therefore, is not cooled by the support floor wall 16, making it possible to prevent the silicon from being solidified in the recovery container 14.
In the above third embodiment, further, the split containers 53a of the recovery container 14 were formed in a cylindrical shape having bottom. However, there may be used split containers 60a having a fan shape in cross section like the recovery container 14 shown in Fig. 11. This makes it possible to recover the silicon without gap. The split containers 60a may desirably be constituted by block pieces, as a matter of course.

## Claims

1. An apparatus for producing silicon, comprising a gas-feed pipe for feeding chlorosilanes and hydrogen into a reaction container, a reaction tube for precipitating silicon from said chlorosilanes and hydrogen, heating means for melting the precipitated silicon, a recovery container disposed just under the opening on the lower end side of said reaction tube and for recovering the molten silicon flowing down from the reaction tube, and a support floor wall on which the bottom portion of said recovery container is placed, wherein said reaction container is provided with moving means for moving said recovery container, and said recovery container is suitably moved by said moving means at the time when the silicon is precipitated so as to vary the position of said recovery container relative to the position on where the silicon flows down.

2. The apparatus for producing silicon according to claim 1, wherein said moving means includes a support shaft for supporting the bottom portion of said recovery container and a drive unit for rotating said support shaft, which are provided for said recovery container, said support shaft being deviated from the position of the center portion of the opening on the lower end side of said reaction tube so that said support shaft suitably rotates at the time when the silicon is recovered in said recovery container.

3. The apparatus for producing silicon according to claim 1, wherein said recovery container is constituted by split pieces that are split into blocks, each split piece being provided with engaging portions by which it can be combined with other split pieces or removed from other pieces, enabling said recovery container to be assembled or disassembled.

4. The apparatus for producing silicon according to claim 2, wherein a support plate is fixed to said support shaft to support the bottom portion of said recovery container, and a heat-insulating member is arranged between said support plate and said bottom wall, the support plate and the heat-insulating member being detachable from said recovery container.

5. The apparatus for producing silicon according to claim 1, wherein said heating means effects the heating by a high-frequency heating coil wound around a partitioning wall on the outer side of said reaction tube in the radial direction thereof.

6. The apparatus for producing silicon according to claim 1, wherein said moving means is a slide means for sliding the recovery container in the transverse direction relative to the support floor wall.
